# EUROPÄISCHE PATENTSCHRIFT

(11) **EP 3 003 767 B1**
(45) Veröffentlichungstag und Bekanntmachung des Hinweises auf die Patenterteilung: **27.12.2017**
(21) Anmeldenummer: 14722683.1
(22) Anmeldetag: 09.05.2014
(51) Int. Cl.: B60K 28/04, B60K 28/06, B60W 50/14, G08B 21/06, B60W 30/12, B62D 15/02

(54) **NOTFALLASSISTENZ ZUR FAHRZEUGFÜHRUNG**
EMERGENCY ASSISTANCE FOR VEHICLE DRIVING
AIDE D'URGENCE À LA CONDUITE DE VEHICULE

(30) Priorität: 04.06.2013 DE 102013009400
(43) Veröffentlichungstag der Anmeldung: 13.04.2016
(73) Patentinhaber: Volkswagen Aktiengesellschaft, 38440 Wolfsburg (DE)
(72) Erfinder: EIGEL, Thomas, 13585 Berlin (DE)
(86) Internationale Anmeldenummer: PCT/EP2014/059571
(87) Internationale Veröffentlichungsnummer: WO 2014/195085

(56) Entgegenhaltungen:
- EP-A1- 2 591 942
- DE-A1-102004 024 692
- DE-A1-102007 043 604
- US-A- 5 585 785

## Beschreibung

Die Erfindung betrifft ein Verfahren zum Überführen eines mit aktivierter Querführungsunterstützung fahrenden Fahrzeugs in einen Fahrzustand mit vermindertem Kollisionsfolgenrisiko bei einem Notfall des Fahrers, also eine Notfallassistenz, gemäß dem Oberbegriff des Anspruchs 1 sowie ein entsprechendes Notfallassistenzsystem gemäß dem Oberbegriff des Anspruchs 6.

Im Bereich der aktiven Sicherheit eines Kraftfahrzeugs sind heutige Fahrerassistenzsysteme bereits in der Lage Fahraufgaben des Fahrers eines Kraftfahrzeugs wahrzunehmen und teilautomatisierte oder teilautonome Fahrfunktionen auszuführen. Dies manifestiert sich in den Beispielen adaptive Geschwindigkeitsregelung (Adaptive Cruise Control) oder Spurhalteassistent (Lane Assist bzw. Heading Control).

So ist aus der Druckschrift DE 10 2006 052 481 A1 ein Verfahren zum Betreiben eines mindestens ein Fahrerassistenzsystem aufweisendes Kraftfahrzeugs bekannt, wobei vorgesehen ist, dass der Fahrer die Möglichkeit hat, in kritischen Situationen das Fahrerassistenzsystem zu aktivieren. Nach der Aktivierung übernimmt das Fahrerassistenzsystem ohne weiteres Zutun des Fahrers die Kontrolle über das Fahrzeug.

Derartige Fahrerassistenzsysteme können jedoch den Fahrer eines Fahrzeugs dazu verleiten die Fahrerassistenzsysteme zu einem vollständig autonomen Fahren zu verwenden, was nicht zulässig ist. Um dem entgegen zu wirken, kann versucht werden zu ermitteln, ob der Fahrer aktiv das Fahrzeug steuert oder sozusagen "freihändig" fährt.

Aus der Druckschrift DE 10 2006 056 094 A1 ist eine Überwachungseinrichtung zur Überwachung des aktuellen Zustands des Fahrers eines Kraftfahrzeugs bekannt, wobei die Überwachungseinrichtung einen Lenkradsensor aufweisen kann, mittels dem sich detektieren lässt, ob der Fahrer das Lenkrad ergriffen hat oder nicht. Wird eine Inaktivität des Fahrers erkannt, so wird in einer ersten Stufe eine Warnung zur Aktivierung des Fahrers ausgegeben. Wird diese Warnung ignoriert, so wird ein aktives, die Führung des Fahrzeugs unterstützendes Assistenzsystem nach einem weiteren Hinweis deaktiviert, wobei ferner eine Zwangsbremsung des Fahrzeugs in den Stand eingeleitet werden kann.

Zur Erkennung der Fahreraktivität wird in der Druckschrift DE 10 2009 028 647 A1 ein Verfahren zur Feststellung des Bedienzustands des Lenkrads eines Kraftfahrzeugs beschrieben. Dabei wird in Abhängigkeit von dem Lenkradwinkel und dem Lenkmoment ein vom Fahrer aktuell aufgebrachtes Lenkmoment bestimmt. Aus dem Verlauf des Fahrerlenkmoments kann bestimmt werden, ob der Fahrer seine Hände am Lenkrad hat oder nicht, also eine Hands-On/Hands-Off-Erkennung durchgeführt werden.

Die Druckschrift DE 10 2004 024 692 A1 bezieht sich auf ein Verfahren und eine Vorrichtung zur Unterstützung des Fahrers eines Fahrzeugs bei der Einhaltung einer Fahrspur. Hierbei wird der Fahrspurverlauf erfasst und mit dem tatsächlichen Fahrtkursverlauf des Fahrzeugs verglichen, wobei aus dem Vergleichsergebnis abgeleitet wird, ob ein Verlassen der Fahrspur bevorsteht oder bereits erfolgt ist. Bei Erkennung eines bevorstehenden oder bereits erfolgten Verlassens der Fahrspur wird selbsttätig ein Lenkraddrehmoment an einem im Fahrzeug angeordneten Lenkrad erzeugt und eine dadurch verursachte Lenkradwinkeländerung bestimmt, wobei eine Fahrerwarnung ausgelöst wird, wenn die Lenkradwinkeländerung ein vorgegebenes Kriterium erfüllt.

Die Druckschrift US 5 585 785 A betrifft einen druckempfindlichen Wandler, der entlang des Umfangs eines Lenkrades angeordnet ist und den von einer Hand auf das Lenkrad ausgeübten Druck misst. Ein Steuergerät überwacht das variable Drucksignal des Wandlers und gibt eine Warnung aus, wenn der Druck auf einen Wert unterhalb eines Grenzwertes fällt und wenn das Übertragungsverhalten des Drucksignals sich erheblich verschlechtert. Ein am Lenkrad angeordnetes Display zeigt eine visuelle Indikation der Schläfrigkeit des Fahrers.

Die Druckschrift EP 2 591 942 A1 betrifft eine Anordnung und ein Verfahren zum Lenken der Aufmerksamkeit des Fahrers auf den Lenkvorgang während des aktiven Betriebs eines Spurhalteassistenten. Dazu wird der Lenkwinkel und das auf das Lenkrad vom Fahrer aufgebrachte Moment gemessen, um aus den gemessenen Daten Rückschlüsse darauf zu ziehen, ob der Fahrer das Lenkrad ergriffen hat oder nicht. Als Funktion des erkannten Hand-Offs des Fahrers können verschiedene Maßnahmen ergriffen werden, wie das Ausgeben einer Hands-Off-Warnung oder das Beenden des Spurhalteassistenten.

Die Druckschrift DE 10 2007 043 604 A1 beschreibt ein Verfahren zur Warnung des Fahrers eines Kraftfahrzeugs, bei dem im Falle einer erhöhten Unfallgefahr die Gierrate verändert wird.

Allerdings sind diese Fahrassistenzsysteme nicht auf einen teilweisen oder gesamten Ausfall des Fahrers des Kraftfahrzeugs ausgelegt. Ein derartiger Fahrerausfall zum Ausführen der ihm obliegenden Fahrfunktionen kann beispielsweise durch eine Übermüdung oder ein plötzlich einsetzendes gesundheitliches Problem des Fahrers bedingt sein. Übermüdung führt oftmals zu einem Sekundenschlaf und damit verbundenem kurzfristigen Verlust der Fahrzeugkontrolle. Unter einem gesundheitlichen Problem wird hier ein körperliches Unvermögen des Fahrers zum Führen des Kraftfahrzeugs verstanden und kann beispielsweise durch einen plötzlichen Herzinfarkt hervorgerufen werden. Derartige Situationen führen oftmals zu gravierenden Unfällen, insbesondere wenn das Fahrzeug sich mit einer hohen Geschwindigkeit auf einer Autobahn oder einer autobahnähnlichen Straße bewegt.

Da sich derartige unfallauslösende Situationen auch im Rahmen gesundheitlicher Probleme, insbesondere Herz- und Kreislaufstörungen älterer Menschen, manifestieren, wurde vom BMFT (Bundesministerium für Bildung und Forschung) das Projekt SmartSenior ins Leben gerufen, welches den Zweck hat technische Maßnahmen zur Beibehaltung der Teilnahme von Senioren am gewohnten Leben zu entwickeln. Im Rahmen dieses Projekts wurde ein Nothalteassistent zum abgesicherten Anhalten eines Fahrzeugs bei plötzlicher Fahrunfähigkeit des Fahrzeugführers entwickelt.

Die Veröffentlichung P. Waldmann et. al.: "Der Nothalteassistent - abgesichertes Anhalten bei plötzlicher Fahrunfähigkeit des Fahrzeugführers", 3. Deutscher AAL-Kongress, 26-27. Januar 2010, Berlin, Tagungsband, ISBN 978-3-8007-3209-8, VDE Verlag Berlin, beschreibt einen derartigen Nothalteassistenten. Dabei besteht für den erkannten Fall des körperlichen Unvermögens des Fahrzeugführers das primäre Ziel des Nothalteassistenten darin, einen Unfall zu vermeiden und das Fahrzeug in einen sicheren Zustand zu überführen. Sollte dies aufgrund einer komplexen Verkehrssituation nicht möglich sein, so muss zumindest die Energie des Fahrzeugs möglichst verringert werden, um die Unfallfolgen zu mindern. Voraussetzung für den Nothalteassistenten ist die sichere Erkennung des körperlichen Unvermögens des Fahrzeugführers, was eine aufwendige Sensorik und Auswertung beinhaltet.

Ziel des Nothalteassistenten bleibt jedoch die Überführung des Fahrzeugs in einen sicheren Zustand, d.h. in den Stillstand, wobei der Nothalteassistent hier ausschließlich für den Einsatz auf Autobahnen und autobahnähnlichen Landstraßen konzipiert ist. In diesem Fall ist der sichere Zustand des Fahrzeugs im Idealfall durch einen Stillstand auf dem Pannenstreifen gegeben, wobei zum Erreichen des Pannenstreifens der Nothalteassistent gegebenenfalls Spurwechsel vornehmen muss.

Der automatisierte Nothalt auf einen Pannenstreifen erfordert neben einer zuverlässigen Spurführung und Längsführung, die durch das ACC und den Lane-Assist bewerkstelligt werden, die Möglichkeit eines abgesicherten Spurwechsels. Dazu muss der Nothalteassistent mit einer komplexen umfelderfassenden Sensorik ausgerüstet sein, um Objekte im 360°-Umfeld des Fahrzeugs zu erfassen und zu tracken, sowie eine präzise digitale Karte zur präzisen Fahrzeugführung aufweisen. Ist aber beispielsweise die Verkehrsdichte so hoch, dass sich ein Spurwechsel als zu schwierig gestaltet, so wird das Fahrzeug innerhalb der aktuellen Fahrspur bis in den Stillstand abgebremst.

Bei diesem Nothalt innerhalb der eigenen Fahrspur auf einer Autobahn oder einer autobahnähnlichen Landstraße soll zwar der rückwärtige Verkehr berücksichtigt werden, bei den auf einer Autobahn üblichen Geschwindigkeiten kann es aufgrund der hohen Relativgeschwindigkeit zwischen dem stehenden Fahrzeug und dem nachfolgenden Verkehr zu Auffahrunfällen mit hohem Energieeintrag in das stehende Fahrzeug kommen, was zu schweren Kollisionsfolgen führen kann. Ferner ist bei dem bekannten Nothaltesystem eine aufwendige Umfeldsensorik notwendig.

Bei den bekannten Nothalteassistenten ist einerseits die Anforderungen an die benötigte komplexe Sensorik, insbesondere diejenige zur Erkennung der Fahruntüchtigkeit, sehr hoch und anderseits besteht bei einem Anhaltevorgang bis zu einem Stillstand des Fahrzeugs außerhalb eines sicheren Stand- oder Pannenstreifens die Gefahr von Auffahrunfällen mit hohem Energieeintrag. Neben einer sicheren Erkennung eines körperlichen Unvermögens muss ferner gewährleistet sein, dass die eingesetzten, ein zumindest teilautonomes Fahren ermöglichenden Assistenzsysteme nicht zu einem Missbrauch durch einen technisch versierten Fahrer eingesetzt werden.

Der Erfindung liegt daher die Aufgabe zugrunde, ein Verfahren und eine Vorrichtung zu schaffen, wobei ein mit hoher Geschwindigkeit fahrendes Fahrzeug bei einem angenommenen Notfall des Fahrers in einen Fahrzustand mit vermindertem Kollisionsfolgenrisiko überführt wird. Dabei soll ein Missbrauch des Notfallsystems durch den Fahrer möglichst vermieden werden.

Diese Aufgabe wird durch ein Verfahren mit den Merkmalen des Anspruchs 1 sowie durch eine Vorrichtung mit den Merkmalen des Anspruchs 6 gelöst. Bevorzugte Ausgestaltungen der Erfindung sind Gegenstand der Unteransprüche.

Das erfindungsgemäße Verfahren zum Überführen eines mit Querführungsunterstützung fahrenden Fahrzeugs in einen Fahrzustand mit vermindertem Kollisionsfolgenrisiko bei einem Notfall des Fahrers, wobei die Geschwindigkeit des Fahrzeugs größer als eine vorgegebene Grenzgeschwindigkeit ist, weist die folgenden Schritte auf:
- Erkennen einer Hands-Off-Situation des Fahrers und Ausgeben einer Hands-Off-Warnung in einer Hands-Off-Phase, und
- Durchführen einer Warnungseskalation in einer Eskalationsphase, falls keine Reaktion auf die Hands-Off-Warnung erfolgt, wobei eine Einleitung der Eskalationsphase verhindert wird, wenn eine vorgegebene Blockadebedingung erfüllt ist.

Da nach dem Erkennen einer Hands-Off-Situation keine Aussage darüber getroffen werden kann, ob der Fahrer körperlich nicht in der Lage ist die Kontrolle über das Fahrzeug auszuüben, d.h. ob eine Notfall vorliegt, oder ob ein technisch versierter Fahrer ein autonomes Fahren unter Ausnutzung der Querführungsunterstützung beabsichtigt, wird in einer Eskalationsphase versucht eine Reaktion des Fahrers oder des Beifahrers zu provozieren. Da davon auszugehen ist, dass eine tatsächliche Fahrunfähigkeit des Fahrers ein unwahrscheinliches Ereignis ist, wird das erfindungsgemäße Notfallverfahren nur in den seltensten Fällen aktiv werden. Der Auslösung des Notfallverfahrens durch die Hands-Off-Erkennung steht der Missbrauch durch den Fahrer gegenüber, der das Verfahren ohne Notwendigkeit durch Loslassen des Lenkrads bewusst aktiviert. Dies wird durch eine vorgegebene Blockadebedingung verhindert. Ist sie Blockadebedingung erfüllt, so wird ein Einleiten der Eskalationsphase und damit ein Initiieren des Notfallverfahrens verhindert. Auf diese Weise wird einem Missbrauch des Notfallverfahrens entgegengewirkt.

Dabei ist die Blockadebedingung eine Funktion bereits erfolgter Auslösungen der Eskalationsphase. Die Blockadebedingung ist daher erfüllt, wenn die Anzahl der Auslösungen der Eskalationsphase gleich einem vorgegebenen Wert ist. Mit anderen Worten, nach einer festgelegten Anzahl von Auslösungen der Eskalationsphase erfolgt keine weitere Auslösung bei einer erkannten Hands-Off-Situation mehr und es erfolgt damit eine Sperrung der Notfallfunktion. Dabei könnte die Sperrung so ausgelegt sein, dass sie nur in einer Kundenwerkstatt behoben werden kann. Liegt eine derartige Sperrung der Notfallfunktion vor, so wird die Querführungsunterstützung nachfolgend der Hand-Off-Warnung in üblicher Weise deaktiviert, wenn keine Fahrerreaktion auf die Hand-Off-Warnung erfolgt, da anderenfalls ein autonomes Fahren möglich wäre.

Weiter bevorzugt ist die Anzahl der Auslösungen der Eskalationsphase innerhalb einer Fahrperiode gleich dem vorgegebenen Wert ist. Mit anderen Worten, die Anzahl der Auslösungen der Eskalationsphase ist auf eine Fahrperiode begrenzt, wobei eine Fahrperiode definiert ist durch das Starten des Fahrzeugs und das Abstellen des Fahrzeugs nach dem Erreichen des Ziels. So könnte die Verfügbarkeit des Notfallverfahrens beispielsweise auf eine Auslösung während einer Fahrperiode begrenzt werden.

Vorzugsweise erfolgt ein Reduzieren der Fahrzeuggeschwindigkeit in einer Eingriffsphase auf eine Geschwindigkeit kleiner oder gleich einer Grenzgeschwindigkeit, wobei das Fahrzeug auf der aktuellen Fahrspur gehalten wird, wenn keine Reaktion auf die Eskalationsphase erfolgt. Mit dem Erreichen der Grenzgeschwindigkeit werden alle Längs- und Querführungen sowie alle Warnungen deaktiviert.

Auf diese Weise wird erreicht, die Geschwindigkeit des beispielsweise mit hoher Geschwindigkeit auf einer Autobahn oder einer autobahnähnlichen Straße fahrenden Fahrzeugs bei einem Notfall in einen Geschwindigkeitsbereich abzusenken, dessen Unfallfolgen beherrschbar sind. Dabei wird als einziges und maßgebliches Auslösekriterium für die Durchführung der Notfallassistenz auf das Erkennen einer Hands-Off-Situation abgestellt, die allerdings einige Zeit, beispielsweise maximal ca. 10 Sekunden, in Anspruch nimmt. Erfolgt keine Reaktion auf die Hands-Off-Warnung, so geht das Verfahren in die Eskalationsphase über, in der der Versuch unternommen wird, den Fahrer oder gegebenenfalls den Beifahrer zu einer Reaktion zu provozieren. Erfolgt auch in dieser Eskalationsphase keine Reaktion, so geht das Verfahren in die Eingriffsphase über, in der einerseits das Warnniveau weiter gesteigert und andererseits die Geschwindigkeit des Fahrzeugs herabgesetzt wird, um Kollisionsenergie aus dem schnell fahrenden Fahrzeug zu nehmen. Erfolgt auch in der Eingriffsphase kein Fahrereingriff, so werden mit dem Erreichen bzw. Unterschreiten der Grenzgeschwindigkeit alle Assistenzeingriffe und Warnungen deaktiviert, um kein autonomes Fahren zu ermöglichen.

Da sich das mit der Grenzgeschwindigkeit bewegende Fahrzeug gerade nicht im Stillstand befindet, werden mögliche Kollisionsfolgen eines Auffahrunfalls aufgrund der geringeren Relativgeschwindigkeit im Vergleich zu einem Auffahrunfall auf ein stehendes Fahrzeug herabgesetzt.

Die Grenzgeschwindigkeit kann von der Fahrspur abhängen, auf der sich das Fahrzeug befindet. So kann bei einer dreispurigen Autobahn die Grenzgeschwindigkeit der linken Fahrspur bei 100 km/h, die Grenzgeschwindigkeit der mittleren Fahrspur bei 60 km/h und diejenige der rechten Fahrspur bei 40 km/h liegen. Es ist auch möglich, dass die Grenzgeschwindigkeit durch die Geschwindigkeit Null gebildet wird, d.h. das Fahrzeug in den Stillstand in der Eingriffsphase abgebremst wird.

Ist die Grenzgeschwindigkeit größer Null, so muss ab dem Zeitpunkt des Erreichens der Grenzgeschwindigkeit und dem Abschalten der Querführungsunterstützung und gegebenenfalls der Längsführungsunterstützung mit einem Unfall des Fahrzeugs gerechnet werden, dessen Folgen aufgrund der für eine Autobahn oder autobahnähnlichen Straße niedrigen Notfallgeschwindigkeit begrenzt sind. Mit anderen Worten, das Fahrzeug beendet seine Fahrt in absehbarer Zeit beispielsweise durch ein Abkommen von der Fahrbahn mit relativ geringer Geschwindigkeit.

Ist die Grenzgeschwindigkeit Null, so bleibt das Fahrzeug in seiner Fahrspur stehen.

Vorzugsweise erfolgt in der Eskalationsphase der Eingriff der Querführungsunterstützung zu einem späteren Zeitpunkt im Vergleich zur Normalunterstützung, wobei der spätere Zeitpunkt als Funktion der Fahrzeuggeschwindigkeit so gewählt ist, dass ein Abkommen des Fahrzeugs von dem aktuellen Fahrstreifen verhindert wird. Mit anderen Worten, das Fahrzeug wird in der Eskalationsphase durch die Querführungsunterstützung nicht mehr mittig zwischen den Markierungen der Fahrspur gehalten, sondern pendelt zwischen den Fahrspurmarkierungen hin und her. Durch das Pendeln des Fahrzeugs zwischen den beidseitigen Markierungen seiner aktuellen Fahrspur soll den Fahrer, falls er fahrfähig ist, oder der mögliche Beifahrer zu einer Reaktion provoziert werden, wobei zusätzlich die Anzeige der Querführungsunterstützung den Zustand "ausgeschaltet" anzeigen kann. Damit wird bei einem bewussten Fahrer der Eindruck erweckt, dass er ohne Querführungsunterstützung fährt und die Gefahr des Abkommen von der Fahrbahn besteht. Ferner wird durch das ungewöhnliche Fahrverhalten der Verkehr in der Umgebung des Fahrzeugs auf eine mögliche Komplikation hingewiesen und gewarnt.

Erfolgt in der Eskalationsphase, die beispielsweise bis zu 10 Sekunden, insbesondere 8 Sekunden betragen kann, immer noch keine Reaktion, so verdichtet sich der Verdacht auf eine Fahrunfähigkeit des Fahrers weiter. Allerdings kann nicht ausgeschlossen werden, dass der Fahrer bewusst die Grenzen der Technik ausloten möchte.

Weiter bevorzugt wird in der Eingriffsphase die Warnungseskalation intensiviert, indem zumindest die Querführung des Fahrzeugs ein ruckartiges Querprofil aufweist. Auf diese Weise wird in der Eingriffsphase weiter versucht durch ein unbequemes Fahrverhalten des Fahrzeugs eine Reaktion des Fahrers oder eines eventuellen Beifahrers zu provozieren. Ferner wird durch diese unorthodoxe Fahrweise dem Fahrzeugumfeld deutlich signalisiert, dass mit dem Fahrzeug etwas nicht stimmt; es erfolgt also eine Warnung an das Fahrzeugumfeld. Dabei erfolgt in der Eingriffsphase die Verringerung der Geschwindigkeit des Fahrzeugs.

Weiter können in der Eingriffsphase Bremsrucke zur Warnungseskalation eingesetzt werden. Diese Bremsrucke sollen eine Reaktion seitens des Fahrers oder des Beifahrers provozieren. Auch hier haben die Bremsrucke den zusätzlichen Effekt einer Warnung an das Fahrzeugumfeld. Ferner können in der Eingriffsphase die akustischen und/oder optischen Warnungen intensiviert werden, um den Fahrer zu einer Reaktion zu veranlassen und es kann in der Eingriffsphase die Warnblinkanlage aktiviert werden, um eine weitere direkte Warnung an das Fahrzeugumfeld zu erzeugen. Schließlich kann das Fahrzeug zur Vermeidung eines Auffahrunfalls mit einer aktivierten Längsführungsunterstützung fahren, wobei die Längsführungsunterstützung aktiv oder passiv im Hintergrund sein kann.

Vorzugsweise ist die Querführungsunterstützung in der Eskalationsphase oder der Eingriffsphase durch den Fahrer nur dann wieder aktivierbar, wenn ein Lenkeingriff des Fahrers erkannt wird. Nach einer Auslösung des Notfallverfahrens, d.h. mit dem Eintritt in die Eskalationsphase, muss daher ein aktiver Lenkeingriff des Fahrers vorliegen, um das Notfallverfahren fahrerseitig zu terminieren und die Querführungsunterstützung für den Fahrer wieder verfügbar zu machen. Andernfalls könnte der Fahrer beispielsweise durch eine Betätigung des ACC-Schalters in der Eskalationsphase oder in der Eingriffsphase eine Fahreraktivität signalisieren und würde auf diese Weise wieder in die Hands-Off-Phase gelangen, in der ihm erneut eine Querführungsunterstützung zur Verfügung stehen würde, ohne dass er die Hände zum Lenkrad geführt hätte. Auf diese Weise wäre es möglich längere Zeit freihändig mit Lenkunterstützung zu fahren. Durch die Forderung eines aktiven Lenkeingriffs wird dies verhindert

Die erfindungsgemäße Vorrichtung, welche zur Durchführung des im Vorangegangenen erläuterten Verfahrens zum Überführen eines mit Querführungsunterstützung fahrenden Fahrzeugs in einen Fahrzustand mit vermindertem Kollisionsfolgenrisiko bei einem Notfall des Fahrers ausgelegt ist, umfasst:
- eine Längsführungseinrichtung,
- eine Querführungseinrichtung,
- eine Hands-Off-Erkennungseinrichtung,
- einen Notfallassistenten zur Durchführung von Warnungseskalationen und Eingriffen in die Fahrfunktionen des Fahrzeugs als Funktion der Ergebnisse der Hands-Off-Erkennungseinrichtung, und
- eine Blockadeeinrichtung zur Blockierung des Notfallassistenten basierend auf der Erfüllung oder Nichterfüllung einer vorgegebenen Blockadebedingung.

Da, wie bereits im Vorangegangenen erwähnt, der Notfallassistent nur in seltenen Fällen aktiv werden wird, muss vermieden werden, dass ein technisch versierter Fahrer die den Notfallassistenten umfassende Vorrichtung zum autonomen Fahrer gebraucht und sozusagen freihändig fährt. Um dem entgegenzuwirken ermöglicht eine Blockadeeinrichtung die Blockade des Notfallassistenten basierend auf einer geeigneten Blockadebedingung. Ist die Blockadebedingung nicht erfüllt, so kann der Notfallassistent aktiv werden. Ist die Blockadebedingung erfüllt, so wird der Notfallassistent blockiert, wenn eine Hands-Off-Situation erkannt und damit eigentlich der Auslösefall eingetreten wäre. Auf diese Weise kann ein autonomes Fahren verhindert werden.

Vorzugsweise blockiert die Blockadeeinrichtung den Notfallassistenten als Funktion bereits erfolgter Aktivierungen des Notfallassistenten, wobei die Blockadebedingung erfüllt ist, wenn die Anzahl der Aktivierungen gleich einem vorgegebenen Wert ist. Dabei kann eine Blockierung beispielsweise erfolgen, wenn die Anzahl bereits erfolgter Aktivierungen des Notfallassistenten einen vorgegebenen Wert erreicht hat. Dabei könnte vorgesehen sein, dass die durch die Blockadeeinrichtung hervorgerufene Sperrung des Notfallassistenten nur durch einen Werkstattbesuch aufgehoben werden könnte. Es ist auch denkbar, die zur Erfüllung der Blockadebedingung notwendige Anzahl von Aktivierungen auf eine Fahrperiode beschränkt ist. Kann beispielsweise während einer Fahrperiode der Notfallassistent nur einmal aktiviert werden, so müsste der bewusste Fahrer das Fahrzeug definitiv abstellen und wieder in Gang setzen, um die Blockade des Notfallassistenten wieder aufzuheben, was bei einer Autobahnfahrt zumindest das Ansteuern des nächsten Parkplatzes bedingt.

Weiter bevorzugt führt der Notfallassistent nach einer positiven Hands-Off-Erkennung die Warnungseskalation in mindestens zwei aufeinanderfolgenden Fahrphasen durch, insbesondere einer Eskalationsphase und einer nachfolgenden Eingriffsphase, wobei der Notfallassistent nach erfolglosem Ablauf der Eingriffsphase und mit dem Erreichen einer Grenzgeschwindigkeit zumindest die Längsführungseinrichtung und die Querführungseinrichtung deaktiviert.

Weiter bevorzugt weist die Vorrichtung eine Einrichtung zur Erkennung einer Fahrerlenkaktivität auf. Mittels der Erkennung der Fahrerlenkaktivität kann eine fahrerseitige Aktivierung der Querführungsunterstützung in der Eskalationsphase und in der Eingriffsphase bewirkt werden. Durch die Erkennung eines fahrerseitigen aktiven Lenkeingriffs kann vermieden werden, dass der Fahrer die Vorrichtung zum zeitweisen freihändigen Fahren benutzt.

Eine bevorzugte Ausführungsform der Erfindung wird nachfolgend anhand der Zeichnungen erläutert. Dabei zeigt
- Fig. 1: eine schematische Funktionsbeschreibung des Notfallverfahrens, und
- Fig. 2: ein Blockdiagramm der Vorrichtung zur Durchführung des Verfahrens.

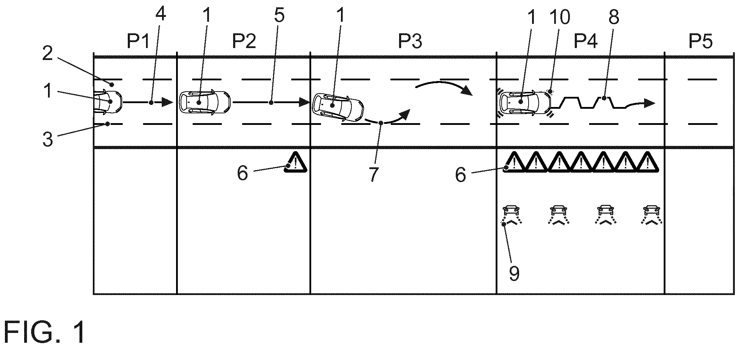

Fig. 1 beschreibt in schematischer Darstellung die Funktionsweise des Verfahrens zum Überführen eines mit Querführungsunterstützung fahrenden Fahrzeugs 1 in einen Fahrzustand mit vermindertem Kollisionsfolgenrisiko bei einem vermuteten Notfall des Fahrers, welches in einem Notfallassistent realisiert ist. Das Verfahren hat das Ziel die Geschwindigkeit des Fahrzeugs 1 kontrolliert auf eine Notfallgeschwindigkeit zu reduzieren, wobei das Verfahren auf einer Hands-Off-Erkennung basiert.

In einer ersten Phase P1 bewegt sich ein Fahrzeug 1 auf einem Fahrstreifen 2, beispielsweise einer Autobahn oder einer autobahnähnlichen Straße, welcher mit Markierungen 3 gegenüber benachbarten Fahrstreifen abgegrenzt ist. In dieser Phase P1 ist der Fahrer fahrtüchtig und das Fahrzeug 1 bewegt sich mit aktivierter Querführungsunterstützung entlang einer Fahrtrajektorie 4, die durch die Querführungsunterstützung, also einen Spurhalteassistent oder Lane-Assist, das Fahrzeug 1 mittig auf seiner Fahrspur 3 hält. Eine Längsführung, wie beispielsweise ACC, kann dabei aktiv oder inaktiv sein.

In der zweiten Phase P2, der Hands-Off-Phase, detektiert eine Hands-Off-Einrichtung, dass der Fahrer des Fahrzeugs 1 das Lenkrad nicht mehr ergriffen hat. Nach einer ausreichenden Zeitspanne, die zum Erkennen des Hands-Off notwendig ist und die zwischen 2 und 10 Sekunden betragen kann, erfolgt eine Hands-Off-Warnung durch zumindest eine akustische Warnung, die in Fig. 1 durch das Warnsignal 6 symbolisiert ist. Während der zweiten Phase P2 bleibt die Querführungsunterstützung aktiv und hält das Fahrzeug 1 entlang der mittigen Fahrtrajektorie 5. Nach Ablauf der zweiten Phase P2 und dem Ausgeben der Hands-Off-Warnung kann allerdings keine Aussage getroffen werden, ob der Fahrer absichtlich oder unabsichtlich keinen Lenkradkontakt hat, wie dies bereits im Vorangegangenen erläutert wurde.

Reagiert der Fahrer des Fahrzeugs 1 nicht auf die Hands-Off-Warnhinweise 8, so kann dies bedeuten, dass der Fahrer absichtlich freihändig fährt, um die automatische Fahrmöglichkeit der Querführung auszutesten. Dies ist zu unterbinden. Die durch die Hands-Off-Erkennung detektierten fehlenden Lenkeingriffe können aber auch bedeuten, dass der Fahrer des Fahrzeugs 1 nicht fahrtüchtig ist. Dies kann ursächlich durch einen medizinischen Notfall oder durch ein Einschlafen des Fahrers, beispielsweise aufgrund einer Übermüdung, bedingt sein.

In der dritten Phase P3, der Eskalationsphase, soll daher unabhängig von dem Grund der fehlenden Lenkaktivität der Versuch unternommen werden, den Fahrer zu reaktivieren oder den Beifahrer zu aktivieren. Dazu wird mit dem Eintreten in die dritte Phase P3 eine erste Stufe der Warnungseskalation durchgeführt und für Fahrer bzw. Beifahrer des Fahrzeugs 1 soll der Eindruck erweckt werden, dass die Querführungsassistenz deaktiviert ist. Dies wird dadurch bewirkt, dass das Fahrzeug 1 nicht mehr in der Mitte des eigenen Fahrstreifens 2 gehalten wird. Ferner wird der Eindruck erweckt, dass die Querführung deaktiviert ist, indem die Anzeige der Querführung abgeschaltet wird. Im Hintergrund bewirkt der in der Eskalationsphase P3 aktivierte Notfallassistent 20, dass die Querführung des Fahrzeugs 1 zu einem späteren Zeitpunkt im Vergleich zu dem normalen Verhalten der Querführung eingreift, wobei der spätere Zeitpunkt aber so gewählt ist, dass das Fahrzeug 1 den Fahrstreifen 2 gerade nicht verlässt. Das Fahrzeug pendelt sozusagen zwischen den linken und rechten Markierungen 3 des Fahrstreifens 2 entlang einer Fahrtrajektorie 7 der dritten Phase P3 hin und her. Für den Fahrer des Fahrzeugs 1, der beispielsweise kurzfristig eingeschlafen war oder die Grenzen der Technik ausloten möchte, wird auf diese Weise der Eindruck erweckt, dass die Querführung deaktiviert ist und er folglich die Fahrverantwortung wieder übernehmen muss. Sollte der Fahrer weiter inaktiv bleiben, was eine Fahruntüchtigkeit wahrscheinlicher werden lässt, so ist dies auch ein dringender Hinweis an einen möglichen Beifahrer nun aktiv zu werden, indem dieser beispielsweise die Lenkung übernimmt oder eine sonstige Maßnahme ergreift. Da in dieser dritten Phase P3 im Hintergrund der Notfallassistent aktiviert ist, wird das Fahrzeug 1 auf der Fahrspur 2 gehalten und kann diese nicht verlassen.

Zeigt der Fahrer des Fahrzeugs 1 weiterhin keine Reaktion, so geht das Verfahren über in die vierte Phase P4, die Eingriffsphase, in der einerseits die Warnungseskalation intensiviert wird und andererseits eine Reduktion der Fahrzeuggeschwindigkeit durch einen geeigneten Eingriff in die Steuerung des Fahrzeugs 1 bewirkt wird. Mit anderen Worten, der Notfallassistent agiert nun im Vordergrund. Die weitere Warnungseskalation kann durch eine dauerhafte akustische Warnung bewirkt werden, wie dies in Fig. 1 schematisch durch die Vielzahl der Warnsymbole 6 dargestellt ist. Ferner wird das Fahrzeug 1 durch kurzfristige Bremsrucke in einen unruhigen Zustand versetzt. Um eine Reaktivierung des Fahrers des Fahrzeugs 1 zu unterstützen oder eine Reaktion des Beifahrers auszulösen, wird die Querführung des Fahrzeugs 1 unkomfortabel gestaltet. Dies wird durch Lenkeingriffe hervorgerufen, die ein ruckartiges Querprofil erzeugen, wie dies durch die Fahrtrajektorie 8 der vierten Phase P4 symbolisch dargestellt ist. Durch diese ungewöhnliche Fahrtrajektorie 8 wird zusätzlich das Fahrzeugumfeld des Fahrzeugs 1 gewarnt. Ferner kann eine blinkende Notfallanzeige 9 darauf hinweisen, dass der Notfallassistent aktiv ist. Eine weitere Warnung des Umfeldes kann beispielsweise noch durch eine Aktivierung der Warnblinkanlage 10 erfolgen.

Mit dem Erreichen der Notfallgeschwindigkeit, die beispielsweise auf der mittleren Spur 60 km/h beträgt, wird die fünfte Phase P5 des Verfahrensablaufs erreicht, in der unter der Voraussetzung einer unkritischen Verkehrssituation die Längs- und Querführungen sowie alle Warnungen deaktiviert werden. Dabei bedeutet eine unkritische Verkehrssituation, dass der weitere Straßenverlauf keine kritische Krümmung aufweist und dass keine kritische Annäherung an ein vorausfahrendes Fahrzeug erkannt wird. Zwar scheint es auf den ersten Blick, dass das Fahrzeug in der fünften Phase P5 mehr oder weniger sich selbst überlassen wird, allerdings sind die Folgen eines Unfalls des Fahrzeugs bei der genannten Notfallgeschwindigkeit weniger gravierend, insbesondere da das Fahrzeug mit hoher Wahrscheinlichkeit die Fahrbahn in absehbarer Zeit verlassen wird. Ferner ist ein Auffahrunfall mit einem nachfolgenden Fahrzeug aufgrund der Relativgeschwindigkeit weniger gravierend als mit einem im Stillstand auf der Fahrspur befindlichen Fahrzeug.

Wie bereits erwähnt, basiert das Notfallverfahren auf die Erkennung einer Hands-Off-Situation, wobei nach dem Erkennen einer derartigen Hands-Off-Situation keine Aussage darüber möglich ist, ob tatsächlich eine Notfall vorliegt oder ob ein technisch versierter Fahrer ein autonomes Fahren unter Ausnutzung der Querführungsunterstützung für eine gewisse Zeit ein autonomes Fahren versucht. Nun ist davon auszugehen, dass eine tatsächliche Fahrunfähigkeit des Fahrers ein unwahrscheinliches Ereignis ist. Folglich wird das in Fig. 1 dargestellte Notfallverfahren nur in den seltensten Fällen aktiv werden. Der Auslösung des Notfallverfahrens durch die Hands-Off-Erkennung steht der Missbrauch durch den Fahrer gegenüber, der das Verfahren ohne Notwendigkeit durch Loslassen des Lenkrads bewusst aktiviert. Um den Missbrauch zu begegnen wird mit der Hands-Off-Warnung 6 überprüft, ob eine vorgegebene Blockadebedingung erfüllt ist. Ist die Blockadebedingung erfüllt, so wird ein Eintritt in die Eskalationsphase P4 und damit ein Initiieren des Notfallverfahrens verhindert. Ist die Blockadebedingung nicht erfüllt, so tritt das Verfahren in die Eskalationsphase P4 ein und das Verfahren läuft in der geschilderten Weise ab. Auf diese Weise wird einem Missbrauch des Notfallverfahrens entgegengewirkt.

Die Blockadebedingung ist in der geschilderten Ausführungsform eine Funktion bereits erfolgter Auslösungen der Eskalationsphase P3. Die Blockadebedingung ist daher erfüllt, wenn die Anzahl der Auslösungen der Eskalationsphase P3 gleich einem vorgegebenen Wert ist. Mit anderen Worten, nach einer festgelegten Anzahl von Auslösungen der Eskalationsphase erfolgt keine weitere Auslösung bei einer erkannten Hands-Off-Situation mehr und somit ist die Notfallfunktion gesperrt, wobei die Sperrung so ausgelegt sein könnte, dass sie nur in einer Kundenwerkstatt behoben werden kann. Liegt eine derartige Sperrung oder Blockade der Notfallfunktion vor, so wird die Querführungsunterstützung nachfolgend der Hand-Off-Warnung 6 in üblicher Weise deaktiviert, wenn keine Fahrerreaktion auf die Hand-Off-Warnung erfolgt, da anderenfalls ein autonomes Fahren möglich wäre.

Es ist auch möglich die Blockadebedingung auf die Anzahl der Auslösungen der Eskalationsphase P3 innerhalb einer Fahrperiode z begrenzen. Mit anderen Worten, die Anzahl der Auslösungen der Eskalationsphase ist auf eine Fahrperiode begrenzt, wobei eine Fahrperiode definiert ist durch das Starten des Fahrzeugs an einem Ausgangspunkt und das Abstellen des Fahrzeugs nach dem Erreichen des Ziels. So könnte die Verfügbarkeit des Notfallverfahrens beispielsweise auf eine Auslösung während einer Fahrperiode begrenzt werden.

Falls der Fahrer in der Eskalationsphase P3 oder der Eingriffsphase wieder fahrtüchtig wird oder dem bewussten Fahrer ist das Fahrverhalten des Fahrzeugs 1 in den genannten Phasen P3, P4 zu unbequem, so wird das Notfallverfahren durch einen aktiven Eingriff des Fahrers in die Fahrzeugführung beendet. Als aktiver Eingriff kann ein Bremsvorgang, ein Lenkeingriff oder ein sonstiger fahrerseitiger Eingriff wie beispielsweise eine Bedienung des ACC-Schalters gewertet werden. Allerdings würde eine Bedienung des ACC-Schalters in den Phasen P3 und P4 eine Fahreraktivität signalisieren mit der er das Verfahren wieder zurück in die zweite Phase P2 versetzen würde, in der dem Fahrer wieder die Querführungsunterstützung zur Verfügung stehen würde, ohne dass der Fahrer das Lenkrad ergriffen hätte. Auf diese Weise wäre ein autonomes Fahren über einen längeren Zeitraum möglich, solange die Blockadebedingung nicht erfüllt ist. Um dies zu vermeiden, steht dem Fahrer die Querführungsunterstützung nach Unterbrechung des Notfallverfahrens erst nach einem aktiven Lenkeingriff wieder zur Verfügung.

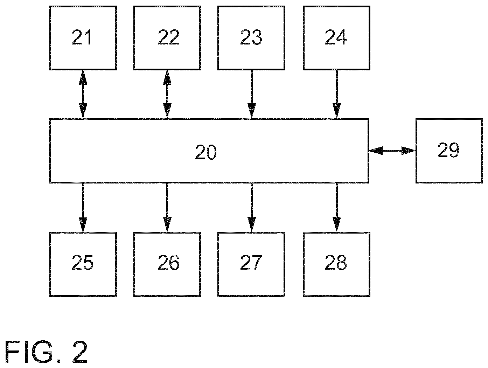

Fig. 2 zeigt in schematischer Darstellung die erfindungsgemäße Vorrichtung, deren Kernbestandteil durch einen Notfallassistenten 20 gebildet wird. Der Notfallassistent 20 steht in Verbindung mit einer Querführungseinrichtung 21 und einer Längsführungseinrichtung 22. Eine Querführungseinrichtung 21 ist beispielsweise eine Spurhalteeinrichtung oder ein Lane-Assist. Als Längsführungseinrichtung 22 kommt beispielsweise eine adaptive Geschwindigkeits- und Abstandsregelung, also ein ACC, oder ein Notbremsassistent in Betracht. Ferner erhält der Notfallassistent 20 Informationen von einer Hands-Off-Erkennung 23 und einer Einrichtung 24 zur Erkennung einer Lenkaktivität des Fahrers.

Aufgrund des Ergebnisses der Hands-Off-Erkennung 23 erzeugt der Notfallassistent 20 geeignete Warnungen 25 akustischer, optischer und/oder haptischer Natur und führt Lenkeingriffe 26, Bremseingriffe 27 und Eingriffe in den Antriebsstrang 28 durch.

Weiter weist die Vorrichtung eine Blockadeeinrichtung 29 auf. Im Fall eines erkannten Hands-Off der Hands-Off-Erkennung 23, die zur Auslösung des Notfallverfahrens dient, übergibt die Notfalleinrichtung 20 diese Auslöseinformation an die Blockadeeinrichtung 29, welche die Gesamtsumme der Auslösungen der Notfalleinrichtung unter Verwendung der Anzahl bereits aufgelaufenen Auslösungen bildet und speichert. Ist die gebildete Summe größer oder gleich einem vorgegebenen Blockadewert, so wird seitens der Blockadeeinrichtung die Auslösung des Notfallverfahrens, d.h. der Eintritt in die Eskalationsphase P3 verhindert. Trifft dies nicht zu, so erfolgt der Eintritt in die Eskalationsphase P3.

### BEZUGSZEICHENLISTE

- P1: erste Phase
- P2: zweite Phase
- P3: dritte Phase
- P4: vierte Phase
- P5: fünfte Phase
- 1: Fahrzeug
- 2: Fahrspur
- 3: Markierungen
- 4: Fahrtrajektorie erste Phase
- 5: Fahrtrajektorie zweite Phase
- 6: akustische/optische Warnung
- 7: Fahrtrajektorie Eskalationsphase Notfallassistent
- 8: Fahrtrajektorie Eingriffsphase Notfallassistent
- 9: optische Anzeige Notfallasisstent
- 10: Warnblinker
- 20: Notfallassistent
- 21: Querführungseinrichtung
- 22: Längsführungseinrichtung
- 23: Hands-Off-Erkennung
- 24: Erkennung Lenkaktivität
- 25: akustische/optische/haptische Warnung
- 26: Lenkeingriff
- 27: Bremseingriff
- 28: Antriebsstrangeingriff
- 29: Blockadeeinrichtung

## Patentansprüche

1. Verfahren zum Überführen eines mit Querführungsunterstützung fahrenden Fahrzeugs (1) in einen Fahrzustand mit vermindertem Kollisionsfolgenrisiko bei einem Notfall des Fahrers, mit den folgenden Schritten:
Erkennen einer Hands-Off-Situation des Fahrers und Ausgeben einer Hands-Off-Warnung in einer Hands-Off-Phase (P2),
Durchführen einer Warnungseskalation in einer Eskalationsphase (P3), falls keine Reaktion auf die Hands-Off-Warnung erfolgt, wobei eine Einleitung der Eskalationsphase (P3) verhindert wird, wenn eine vorgegebene Blockadebedingung erfüllt ist
**dadurch gekennzeichnet, dass**
die Geschwindigkeit des Fahrzeugs größer als eine vorgegebene Grenzgeschwindigkeit ist, und
die Blockadebedingung eine Funktion bereits erfolgter Auslösungen der Eskalationsphase (P3) ist und die Blockadebedingung erfüllt ist, wenn die Anzahl der Auslösungen der Eskalationsphase (P3) gleich einem vorgegebenen Wert ist.

2. Verfahren nach Anspruch 1, **dadurch gekennzeichnet, dass** die Anzahl der Auslösungen der Eskalationsphase (P3) innerhalb einer Fahrperiode gleich dem vorgegebenen Wert ist.

3. Verfahren nach einem der vorangegangenen Ansprüche, **gekennzeichnet durch** ein Reduzieren der Fahrzeuggeschwindigkeit in einer der Eskalationsphase (P3) nachfolgenden Eingriffsphase (P4) auf eine Geschwindigkeit kleiner oder gleich einer Grenzgeschwindigkeit, wobei das Fahrzeug (1) auf der aktuellen Fahrspur (2) gehalten wird, wenn keine Reaktion auf die Eskalationsphase (P3) erfolgt, und wobei mit dem Erreichen der Grenzgeschwindigkeit alle Längs- und Querführungen sowie alle Warnungen deaktiviert werden.

4. Verfahren nach einem der vorangegangenen Ansprüche, **dadurch gekennzeichnet, dass** in der Eskalationsphase (P3) ein Eingriff der Querführungsunterstützung zu einem späteren Zeitpunkt im Vergleich zur Normalunterstützung erfolgt, wobei der spätere Zeitpunkt als Funktion der Fahrzeuggeschwindigkeit so gewählt ist, dass ein Abkommen des Fahrzeugs (1) von dem aktuellen Fahrstreifen (2) verhindert wird, und dass in der Eingriffsphase (P4) die Warnungseskalation intensiviert wird, indem zumindest die Querführung des Fahrzeugs (1) ein ruckartiges Querprofil aufweist.

5. Verfahren nach einem der vorangegangenen Ansprüche, dass die Querführungsunterstützung in der Eskalationsphase (P3) oder in der Eingriffsphase (P4) durch den Fahrer nur dann wieder aktivierbar ist, wenn ein Lenkeingriff des Fahrers erkannt wird.

6. Vorrichtung ausgelegt zur Durchführung des Verfahrens zum Überführen eines mit Querführungsunterstützung fahrenden Fahrzeugs in einen Fahrzustand mit vermindertem Kollisionsfolgenrisiko bei einem Notfall des Fahrers nach einem der vorangegangenen Ansprüche, mit
einer Längsführungseinrichtung (22),
einer Querführungseinrichtung (21), und
einer Hands-Off-Erkennungseinrichtung (23), und
einem Notfallassistenten (20) zur Durchführung von Warnungseskalationen und Eingriffen in die Fahrfunktionen des Fahrzeugs als Funktion der Ergebnisse der Hands-Off-Erkennungseinrichtung (23) und einer Blockadeeinrichtung (29) zur Blockierung des Notfallassistenten (20) basierend auf der Erfüllung oder Nichterfüllung einer vorgegebenen Blockadebedingung.

7. Vorrichtung nach Anspruch 6, **dadurch gekennzeichnet, dass** die Blockadeeinrichtung (20) den Notfallassistenten (20) als Funktion bereits erfolgter Aktivierungen des Notfallassistenten (20) blockiert, wobei die Blockadebedingung erfüllt ist, wenn die Anzahl der Aktivierungen gleich einem vorgegebenen Wert ist.

8. Vorrichtung nach Anspruch 7, **dadurch gekennzeichnet, dass** der Notfallassistent (20) nach einer positiven Hands-Off-Erkennung die Warnungseskalation in mindestens zwei aufeinanderfolgenden Fahrphasen, insbesondere eine Eskalationsphase (P3) und einer nachfolgenden Eingriffsphase (P4), durchführt, wobei der Notfallassistent (20) nach erfolglosem Ablauf der Eingriffsphase (P4) und mit dem Erreichen einer Grenzgeschwindigkeit zumindest die Längsführungseinrichtung (22) und die Querführungseinrichtung (21) deaktiviert.

9. Vorrichtung nach einem der Ansprüche 6 bis 8, **dadurch gekennzeichnet, dass** die Vorrichtung eine Einrichtung (24) zur Erkennung einer Fahrerlenkaktivität aufweist.

## Claims

1. Method for transferring a vehicle (1) traveling with lateral guidance support into a driving state with a reduced risk of the consequences of a collision in the event of the driver experiencing an emergency, comprising the following steps:
Detecting a hands-off situation of the driver and outputting a hands-off warning in a hands-off phase (P2),
Carrying out a warning escalation in an escalation phase (P3) if there is no reaction to the hands-off warning, wherein initiation of the escalation phase (P3) is prevented if a predefined blocking condition is satisfied,
**characterized in that** the speed of the vehicle is higher than a predefined speed limit, and
the blocking condition is a function of instances of triggering of the escalation phase (P3) which have already taken place, and the blocking condition is satisfied if the number of instances of triggering of the escalation phase (P3) is equal to a predefined value.

2. Method according to Claim 1, **characterized in that** the number of instances of triggering of the escalation phase (P3) within one driving period is equal to the predefined value.

3. Method according to one of the preceding claims, **characterized by** a reduction in the vehicle speed in an intervention phase (P4) following the escalation phase (P3) to a speed which is lower than or equal to a speed limit, wherein the vehicle (1) is kept on the current lane (2) if there is no reaction to the escalation phase (P3), and wherein all the longitudinal and lateral guidance as well as all the warnings are deactivated when the speed limit is reached.

4. Method according to one of the preceding claims, **characterized in that** in the escalation phase (P3) an intervention of the lateral guidance support takes place at a later time compared to normal support, wherein the later time is selected as a function of the vehicle speed in such a way that the vehicle (1) is prevented from exiting the current lane (2), and **in that** in the intervention phase (P4) the warning escalation is intensified by virtue of the fact that at least the lateral guidance of the vehicle (1) has a jerky lateral profile.

5. Method according to one of the preceding claims, in that the lateral guidance support in the escalation phase (P3) or in the intervention phase (P4) can be actuated again by the driver only if a steering intervention of the driver is detected.

6. Device configured for carrying out the method for transferring a vehicle traveling with lateral guidance support into a driving state with a reduced risk of the consequences of a collision in the event of the driver experiencing an emergency, according to one of the preceding claims, having
a longitudinal guidance apparatus (22),
a lateral guidance apparatus (21), and
a hands-off detection apparatus (23), and
an emergency assistant (20) for carrying out warning escalations and interventions into the driving functions of the vehicle as a function of the results of the hands-off detection apparatus (23) and a blocking apparatus (29) for blocking the emergency assistant (20) on the basis of satisfaction or non-satisfaction of a predefined blocking condition.

7. Device according to Claim 6, **characterized in that** the blocking apparatus (20) blocks the emergency assistant (20) as a function of instances of activation of the emergency assistant (20) which have already taken place, wherein the blocking condition is satisfied if the number of instances of activation is equal to a predefined value.

8. Device according to Claim 7, **characterized in that** after a positive hands-off detection the emergency assistant (20) carries out the warning escalation in at least two successive driving phases, in particular an escalation phase (P3) and a subsequent intervention phase (P4), wherein after the intervention phase (P4) has run without success and when a speed limit is reached the emergency assistant (20) deactivates at least the longitudinal guidance apparatus (22) and the lateral guidance apparatus (21).

9. Device according to one of Claims 6 to 8, **characterized in that** the device has an apparatus (24) for detecting a driver steering activity.

## Revendications

1. Procédé destiné à faire passer un véhicule (1) conduit avec une assistance au guidage transversal dans un état de conduite présentant un risque de collision réduit en cas de détresse du conducteur, comprenant les étapes consistant à :
détecter une situation de volant non tenu par le conducteur et émettre une alarme d'autonomie cours d'une phase d'autonomie (P2),
effectuer une progression d'alarme au cours d'une phase de progression (P3) dans le cas où il ne se produit aucune réaction à l'alarme d'autonomie, dans lequel un passage dans la phase de progression (P3) est inhibé lorsqu'une condition de blocage prédéterminée est satisfaite,
**caractérisé en ce que** la vitesse du véhicule est supérieure à une vitesse limite prédéterminée, et
la condition de blocage est une fonction de déclenchements déjà réalisés de la phase de progression (P3) et la condition de blocage est satisfaite lorsque le nombre des déclenchements de la phase de progression (P3) est égal à une valeur prédéterminée.

2. Procédé selon la revendication 1, **caractérisé en ce que** le nombre des déclenchements de la phase de progression (P3) au cours d'une période de conduite est égal à une valeur prédéterminée.

3. Procédé selon l'une quelconque des revendications précédentes, **caractérisé par** une réduction de la vitesse du véhicule, au cours d'une phase d'intervention (P4) faisant suite à la phase de progression (P3), à une vitesse inférieure ou égale à une vitesse limite, dans lequel le véhicule (1) est maintenu sur une voie de circulation (2) actuelle lorsqu'aucune réaction à la phase de progression (P3) ne se produit, et dans lequel toutes les manoeuvres longitudinales et transversales et toutes les alertes sont désactivées lorsque la vitesse limite est atteinte.

4. Procédé selon l'une quelconque des revendications précédentes, **caractérisé en ce que**, lors de la phase de progression (P3), une intervention de l'assistance au guidage transversal est effectuée à un instant ultérieur par comparaison à l'assistance normale, dans lequel l'instant ultérieur est sélectionné en fonction de la vitesse du véhicule de manière à éviter que le véhicule (1) s'écarte de la file de circulation actuelle (2), et à ce que, au cours de la phase d'intervention (P4), la progression d'alarme soit intensifiée en faisant en sorte qu'au moins le guidage transversal du véhicule (1) présente un profil transversal saccadé.

5. Procédé selon l'une quelconque des revendications précédentes, **caractérisé en ce que**, l'assistance au guidage transversal ne peut être réactivée par le conducteur au cours de la phase de progression (P3) ou de la phase d'intervention (P4) que lorsqu'une intervention de braquage effectuée par le conducteur est détectée.

6. Dispositif conçu pour mettre en oeuvre le procédé destiné à faire passer un véhicule conduit avec une assistance au guidage transversal dans un état de conduite présentant un risque de collision réduit en cas de détresse du conducteur selon l'une quelconque des revendications précédentes, comportant un dispositif de guidage longitudinal (22),
un dispositif de guidage transversal (21), et
un dispositif de détection d'autonomie (23), et
un assistant de détresse (20) destiné à mettre en oeuvre des progressions d'alarmes et des interventions dans les fonctions de conduite du véhicule en fonction des résultats du dispositif de détection d'autonomie (23) et
un dispositif de blocage (29) destiné à bloquer l'assistant de détresse (20) sur la base de la satisfaction ou de la non-satisfaction d'une condition de blocage prédéterminée.

7. Dispositif selon la revendication 6, **caractérisé en ce que** le dispositif de blocage (20) bloque l'assistant de détresse (20) en fonction d'activations déjà effectuées de l'assistant de détresse (20), dans lequel la condition de blocage est satisfaite lorsque le nombre des activations est égal à une valeur prédéterminée.

8. Dispositif selon la revendication 7, **caractérisé en ce que** l'assistant d'urgence (20) met en oeuvre la progression d'alarme après une détection d'autonomie positive dans au moins deux phases de conduite consécutives, notamment une phase de progression (P3) et une phase d'intervention (P4) suivante, dans lequel l'assistant de détresse (20) désactive au moins le dispositif de guidage longitudinal (22) et le dispositif de guidage transversal (21) après que la phase d'intervention (P4) se soit déroulée sans résultat et lorsqu'une vitesse limite est atteinte.

9. Dispositif selon l'une quelconque des revendications 6 à 8, **caractérisé en ce que** le dispositif comporte un moyen (24) destiné à détecter une activité de braquage effectuée par le conducteur.
